Europäisches Patentamt

European Patent Office

Office européen des brevets

(11) Veröffentlichungsnummer: **0 646 783 A2**

# (12) EUROPÄISCHE PATENTANMELDUNG

(21) Anmeldenummer: **94115341.3**

(51) Int. Cl.6: **G01N 21/62**

(22) Anmeldetag: **29.09.94**

(30) Priorität: **02.10.93 DE 4333709**

(43) Veröffentlichungstag der Anmeldung:
**05.04.95 Patentblatt 95/14**

(84) Benannte Vertragsstaaten:
**AT CH ES FR GB IT LI NL SE**

(71) Anmelder: **PEAK WERKSTOFF GmbH**
**Siebeneicker Strasse 235**
**D-42553 Velbert (DE)**

(72) Erfinder: **Commandeur, Bernd, Dipl.-Ing.**
**Finkenweg 5**
**D-42489 Wülfrath (DE)**
Erfinder: **Keck, Hans-Günter**
**Wülfrather Strasse 33**
**D-42553 Velbert (DE)**
Erfinder: **Sosnitza, Josef**
**Zwinglistrasse 15**
**D-42275 Wuppertal (DE)**

(54) **Kalibrierprobe sowie Verfahren zum Herstellen einer Kalibrierprobe.**

(57) Die Erfindung betrifft eine Kalibrierprobe sowie Verfahren zum Herstellen einer Kalibriersprobe für die Emissionspektroskopie. Die Kalibrierprobe weist als Inhaltsstoffe einen Grundwerkstoff und wenigstens ein Legierungselement auf, wobei die Inhaltsstoffe in feiner, gleichmäßiger Verteilung mit einer maximalen Korngröße von 100 μm in der Kalibrierprobe vorliegen. Zur Herstellung der Kalibrierprobe wird die Schmelze des Grundwerkstoffs und des Legierungsbestandteils mittels einer Zerstäubervorrichtung unter Zufuhr eines Inertgases in feindisperse Teilchen zerstäubt und auf einer sich retaliv zur Zerstäubervorrichtung bewegenden Auffangvorrichtung zu einem Vorformling verfestigt. Aus diesem Vorformling wird ggf. nach Warm- und/oder Kaltumformung die Kalibrierprobe gefertigt.

EP 0 646 783 A2

Die Erfindung betrifft eine Kalibrierprobe sowie ein Verfahren zum Herstellen derselben, insbesondere für die Emissionsspektroskopie, wobei die Kalibrierprobe als Inhaltsstoffe einen Grundwerkstoff und wenigstens ein Legierungselement aufweist.

Mittels der Emissionsspektroskopie kann die Zusammensetzung von metallischen Werkstoffen, beispielsweise Aluminiumwerkstoffen, qualitativ und/oder quantitativ ermittelt werden. Dabei wird die zu untersuchende Probe örtlich zur Emission von Strahlen angeregt, indem sie beispielsweise durch Funkenentladung, Lichtbogen oder Laser punktförmig erhitzt wird. Das sich anschließende Spektralanalyseverfahren als solches ist allgemein bekannt und braucht an dieser Stelle nicht näher erläutert zu werden.

Um qualitive und/oder quantitative Aussagen über die Zusammensetzung der Probe aus dem durch die Analyse erhaltenen Spektrum machen zu können, ist es erforderlich, das Spektralanalysegerät in regelmäßigen Zeitabständen, beispielsweise täglich, zu rekalibrieren und/oder eine Grundeinstellung vorzunehmen. Dazu werden als Kalibrierproben sogenannte Rekalibrierproben oder Kalibrierstandards verwendet, die bekannte Zusammensetzungen aufweisen. Ein Kalibrierstandard besitzt dabei eine genau definierte Zusammensetzung, während eine Rekalibrierprobe lediglich eine bekannte, dem Kalibrierstandard angepaßte Zusammensetzung aufweist. Außer für eine Grundeinstellung oder Eichung ist es daher ausreichend, für die Kalibrierung eines Spektralanalysegerätes eine Rekalibrierprobe zu verwenden. Im folgenden wird überwiegend von einer Kalibrierprobe gesprochen, ohne daß damit eine Beschränkung verbunden sein soll.

Die Kalibrierproben werden entsprechend der normalen Meßmethode ebenfalls örtlich zur Emission von Strahlen angeregt und einer anschließenden Spektralanalyse unterzogen. Aus dem daraus erhaltenen Spektrum kann eine Zuordnung der Wellenlänge und der Intensität der emittierten Strahlung zu einem Inhaltsstoff und dessen Gewichtsanteil erfolgen.

Im allgemeinen wird dabei so vorgegangen, daß eine sogenannte Niedrig- und Hochprobe zur Kalibrierung des Spektralanalysegerätes verwendet werden. Die Hochprobe enthält dabei einen hohen Gewichtsanteil des betreffenden Legierungselements bzw. der Legierungselemente, während die Niedrigprobe lediglich einen sehr geringen Anteil aufweist. Durch die erhaltenen Meßwerte können beispielsweise durch Interpolation beliebige Zwischenwerte ermittelt werden, die bei der Untersuchung von Proben auftreten können.

Für exakte Messungen ist es daher zum einen erforderlich, daß die Kalibrierproben hinsichtlich der Genauigkeit der mengenmäßigen Zusammensetzung den gestellten Anforderungen genügen. Zum anderen ist es erforderlich, daß die Inhaltsstoffe in der Kalibrierprobe gleichmäßig verteilt sind, da bei dem Analyseverfahren lediglich eine örtliche Anregung erfolgt, so daß bei evtl. Inhomogenitäten der Kalibrierprobe nicht alle Inhaltsstoffe oder nur ein nicht repräsentativer Bruchteil derselben im Spektrum wiedergegeben sein könnten. Dies würde zu einer Verfälschung der zugrunde liegenden Kalibrierkurve des Spektralanalysegrätes führen, wodurch teilweise erhebliche Fehler der Analysedaten der zu untersuchenden Proben verursacht werden könnten.

Inhomogenitäten treten insbesondere bei der Herstellung von Kalibrierproben mittels Gießen auf, da z. B. durch unterschiedliche Erstarrungsgeschwindigkeiten der Inhaltsstoffe, beispielsweise von Aluminium-Silicium-, Aluminium-Blei- oder Aluminium-Zinn-Legierungen, Seigerungen gebildet werden. Zur Vermeidung derartiger Inhomogenitäten ist es aus der DE-OS 40 32 322 bekannt, einen Kalibrierstandard für Metalle und Legierungen aus feinen Metallkörpern durch Mischen und Formen herzustellen. Als Metallkörper kommen beispielsweise Körner, Folien, Stäbe, Drähte oder ein Pulver zur Anwendung. Die Metallkörper werden aus einem gegossenen Formling hergestellt, der aus einer schnellverfestigten Schmelze erhalten wird. Anschließend werden die Metallkörper mit üblichen Mischvorrichtungen gemischt und durch Pressen, Extrusion, Walzen, Schmieden und/oder Sintern zu einem Vorformling geformt, aus dem der Kalibrierstandard gefertigt wird. Es kann jedoch bei der Herstellung der Kalibrierstandards gemäß diesem Verfahren nicht ausgeschlossen werden, daß während der Vielzahl der Verfahrensschritte Verunreinigungen eingeschlossen werden, die anschließend auch im Kalibrierstandard vorhanden sind. Ferner besteht ein Nachteil darin, daß bei der Herstellung des Kalibrierstandards aus den einzelnen Metallkörpern Gaseinschlüsse gebildet werden können, die sich bei den Kalibriermessungen für das Spektralanalysegerät negativ auswirken können.

Der Erfindung liegt die Aufgabe zugrunde, eine Kalibrierprobe zu schaffen, bei welcher die obengenannten Nachteile vermieden werden.

Die Aufgabe wird gemäß der Erfindung durch eine Kalibrierprobe gelöst, die als Inhaltsstoffe einen Grundwerkstoff und wenigstens ein Legierungselement aufweist und dadurch gekennzeichnet ist, daß die Inhaltsstoffe in feiner, gleichmäßiger Verteilung und mit einer maximalen Korngröße von 100 $\mu$m vorliegen, wobei der Werkstoff für die Kalibrierprobe durch Verfestigen der feindispers zerstäubten Schmelze der Inhaltsstoffe hergestellt ist. Durch die homogene Verteilung der Inhaltsstoffe und der geringen Korngröße kann gewährleistet werden, daß bei der örtlichen Anregung der Probe zur Emission von Strahlen durch punktförmige Erhitzung alle Inhaltsstoffe gleichmäßig erfaßt werden können. Das dadurch ermittelte Spektrum entspricht somit der tatsächlichen Zusammensetzung der untersuchten Probe.

In einer Ausgestaltung der Erfindung weist die Kalibrierprobe einen Wasserstoffgehalt von weniger als 1 ppm auf. In einer weiteren Ausgestaltung der Erfindung weist die Kalibrierprobe einen Sauerstoffgehalt von weniger als 300 ppm auf. Durch die geringfügigen Gaseinschlüsse können Verfälschungen der Meßergebnisse weitestgehend vermieden werden.

Weiterhin betrifft die Erfindung ein Verfahren zum Herstellen einer derartigen Kalibrierprobe. Die Kalibrierprobe wird gemäß der Erfindung dadurch hergestellt, daß zunächst eine Schmelze des Grundwerkstoffes und des Legierungsbestandteils entsprechend der Zusammensetzung der Kalibrierprobe hergestellt wird, daß die Schmelze mittels einer Zerstäubervorrichtung unter Zufuhr eines Inertgases, beispielsweise Stickstoff oder Argon, in feindisperse Teilchen zerstäubt wird, die auf einer sich relativ zur Zerstäubervorrichtung bewegenden Auffangvorrichtung zu einem Vorformling verfestigt werden, und daß aus dem Vorformling der Kalibrierstandard gefertigt wird. Dieses auch als Sprühkompaktieren bezeichnete Verfahren hat insbesondere bei der Herstellung von Kalibrierproben den Vorteil, daß durch die feindisperse Zerstäubung der Schmelze einerseits und dem schnellen Abkühlen der dabei erzeugten Teilchen auf der Auffangvorrichtung bzw. der jeweils der Zerstäubervorrichtung zugewandten Oberfläche des Vorformlings andererseits Entmischungen weitestgehend vermieden werden können. Die zerstäubten Teilchen der Schmelze weisen jeweils die gewünschte Zusammensetzung auf und erstarren nahezu augenblicklich beim Auftreffen auf der Oberfläche der Auffangvorrichtung, so daß der Vorformling aus einer Vielzahl von kleinen jeweils für sich erstarrten Teilchen besteht. Entmischungsvorgänge zwischen den einzelnen Teilchen sind daher nahezu ausgeschlossen. Der Vorformling und somit die Kalibrierprobe weisen daher die gewünschte homogene Verteilung ihrer Inhaltsstoffe auf.

Weiterhin besteht ein Vorteil darin, daß durch die in der Regel hohen Auftreffgeschwindigkeiten der Teilchen auf die Auffangvorrichtung, diese komprimiert und kompaktiert werden, so daß Gaseinschlüsse weitestgehend vermieden werden können. Der Vorformling und somit die Kalibrierprobe weisen daher nahezu keine Gaseinschlüsse auf. Dabei kann erreicht werden, daß der Wasserstoffgehalt kleiner als 1 ppm und der Sauerstoffgehalt kleiner als 300 ppm ist.

In einer zweckmäßigen Ausgestaltung der Erfindung ist vorgesehen, daß die Auffangvorrichtung unterhalb des Sprühkegels der zerstäubten Schmelze rotiert. Weiterhin kann vorgesehen werden, daß die Zerstäubungsvorrichtung hin- und herbewegt wird. Insgesamt wird dadurch ein in etwa zylinderförmiger Vorformling hergestellt, der einem weiteren Bearbeitungsvorgang zur Herstellung der Kalibrierprobe, beispielsweise einer Warm- und/oder Kaltumformung zugeführt werden kann.

In einer anderen vorteilhaften Ausführungsform der Erfindung ist vorgesehen, daß der Abstand zwischen der Zerstäubervorrichtung und der jeweils der Zerstäubervorrichtung zugekehrten Oberfläche der Auffangvorrichtung bzw. des Vorformlings im wesentlichen konstant gehalten wird, in dem die Auffangvorrichtung in Abhängigkeit von der Dicke des Vorformlings relativ zum Zerstäuber von diesem abgezogen wird. Dadurch sind die zerstäubten Teilchen jeweils bezüglich ihrer Verweilzeit, Auftreffgeschwindigkeit und Auftrefftemperatur gleichen Bedingungen ausgesetzt, die insgesamt zu einer weiteren Verbesserung der Homogenität auch bezüglich der Kornbildung innerhalb der einzelnen Teilchen des Vorformlings und somit der Kalibrierprobe führen.

Grundsätzlich ist das Herstellungsverfahren gemäß der Erfindung für Kalibrierproben nicht auf bestimmte Grundwerkstoffe oder Legierungselemente beschränkt. Das Verfahren eignet sich jedoch besonders für die Herstellung von Kalibrierproben auf Aluminiumbasis, da insbesondere hochlegierte Aluminiumlegierungen aufgrund von Dichteunterschieden und/oder Kristallbildung zu Entmischungen neigen. Auch kann das Verfahren bei der Herstellung von Kalibrierproben mit Vorteil verwendet werden, deren Legierungselemente zu Agglomerationen, Koagulationen oder Seigerungen neigen.

Gemäß einer weiteren zweckmäßigen Ausgestaltung der Erfindung kann es vorgesehen werden, daß wenigstens ein Legierungselement durch Partikelinjektion beim Sprühkompaktieren zugegeben wird. Dies ist insbesondere bei einer Aluminiumlegierung mit Legierungselementen vorteilhaft, die zu starken Seigerungen neigen, beispielsweise Aluminium-Blei-Legierungen. Dabei wird das Legierungselement als Elementpulver oder eine Schmelze des Legierungselementes durch wenigstens einen zusätzlichen Sprühstrahl mittels Zusatzdüsen in den Sprühstrahl der Schmelze und/oder auf die dem Sprühstrahl zugewandte Oberfläche des Sprühgutes in den Werkstoff eingebracht. Damit können ggf. in der Schmelze auftretende Inhomogenitäten, beispielsweise durch Dichteunterschiede, keine Auswirkung auf die gleichmäßige Verteilung, beispielsweise des Bleis im Vorformling haben.

Aufgrund der feindispersen Zerstäubung der Schmelze, ist es möglich, einen homogenen Vorformling sowohl bei hochlegierten als auch bei niedriglegierten Kalibrierproben zu erhalten. Durch das erfindungsgemäße Herstellungsverfahren für Kalibrierstandards ist sichergestellt, daß sowohl die sogenannten Hochproben als auch die sogenannten Niedrigproben eine homogene Verteilung ihrer Inhaltsstoffe aufweisen und weiterhin nahezu frei von Gaseinschlüssen sind.

Ferner besteht in vorteilhafter Weise die Möglichkeit, Kalibrierproben mit mehreren Legierungselementen in nahezu beliebiger Zusammensetzung herzustellen. Dies hat den Vorteil, daß für die Grundeinstellung bzw. die Rekalibrierung eines Spektralanalysegerät lediglich ein Analyseverfahren mittels eines Kalibrierstandards bzw. einer Rekalibrierprobe durchgeführt werden muß. Soll beispielsweise eine Versuchsreihe von Proben durchgeführt werden, die Aluminium als Grundwerkstoff und Eisen, Silicium, Kupfer und Nickel als Legierungselemente enthalten, kann das Spektralanalysegerät durch die Verwendung eines Kalibrierstandards mit den entsprechenden Legierungselementen kalibriert werden. Eine Kalbrierung des Spektralanalysegerätes anhand mehrerer Kalibrierstandards aus jeweils einer Aluminium-Eisen-, Aluminium-Silicium-, Aluminium-Kupfer- und Aluminium-Nickel-Legierung ist nicht mehr erforderlich. Auch können die Legierungselemente unabhängig von ihren Eigenschaften zueinander ausgewählt werden, da durch das erfindungsgemäße Herstellungsverfahren Seigerungen und Entmischungen weitestgehend vermieden werden, die insbesondere bei bestimmten Zusammensetzungen von Legierungselementen auftreten.

Zur Herstellung der Kalibrierproben aus dem Vorformling kann vorgesehen werden, daß der verfestigte Vorformling mittels Warm- und/oder Kaltumformung zu einer Stange umgeformt wird. Aus dieser Stange können mittels spanender Verarbeitungsverfahren die Kalibrierproben mit entsprechenden Durchmesser und entsprechender Dicke gesägt, gefräst und/oder gedreht werden. Die Oberfläche, die durch die punktförmig aufgebrachte Hitze örtlich angeregt wird, kann durch mechanische Feinstbearbeitung, beispielsweise Schleifen, den Anforderungen entsprechend nachbearbeitet werden.

Die Erfindung wird nun anhand der Beispiele näher verdeutlicht. In den Beispielen wird mit content, wt.-% der Anteil des betreffenden Elementes in Gewichts-% bezeichnet. Die in der entsprechenden Zeile bzw. Spalte wiedergegebenen Werte entsprechen der Zusammensetzung eines Kalibrierstandards, während in der Zeile bzw. Spalte die mit max. bzw. min. gekennzeichnet ist, der maximale Gehalt in Gewichts-% bzw. der minimale Gehalt in Gewichts-% des betreffenden Inhaltstoffes einer Rekalibrierprobe wiedergegeben ist. Die Beispiele 1 bis 5 stellen jeweils Aluminium-SiliciumLegierungen dar, wobei Beispiels 1, 3 bis 5 hochlegierten Proben und Beispiel 2 einer niedriglegierten Probe entsprechen. In Beispiel 6 ist eine Aluminium-Zink-Legierung wiedergegeben.

| Beispiel 1 | | | | | | | | | | | | |
|---|---|---|---|---|---|---|---|---|---|---|---|---|
| Element | Si | Cu | Ni | Mg | P | Fe | Mn | Zn | Ti | Cr | Sn | Pb | Al |
| content, wt.-% | 25.0 | 5.0 | 3.0 | 3.0 | 0.005 | 2.0 | 0.5 | 0.5 | 0.3 | 0.1 | 0.05 | 0.05 | bal. |
| max. content | 27.0 | 5.3 | 3.3 | 3.3 | 0.01 | 2.2 | 0.6 | 0.6 | 0.35 | 0.15 | 0.10 | 0.10 | - |
| min. content | 23.0 | 4.7 | 2.7 | 2.7 | 0.002 | 1.8 | 0.4 | 0.4 | 0.25 | 0.05 | 0.03 | 0.03 | - |

| Beispiel 2 | | | | | | | | | | | | |
|---|---|---|---|---|---|---|---|---|---|---|---|---|
| Element | Si | Cu | Ni | Mg | P | Fe | Mn | Zn | Ti | Cr | Sn | Pb | Al |
| content, wt.-% | 5.0 | 1.0 | 1.0 | 1.0 | 0.005 | - | - | - | - | - | - | - | bal. |
| max. content | 5.5 | 1.15 | 1.15 | 1.15 | 0.01 | - | - | - | - | - | - | - | - |
| min. content | 4.5 | 0.85 | 0.85 | 0.85 | 0.002 | - | - | - | - | - | - | - | - |

| Beispiel 3 | | | | | | | | | | | | |
|---|---|---|---|---|---|---|---|---|---|---|---|---|
| Element | Si | Cu | Ni | Mg | P | Fe | Mn | Zn | Ti | Cr | Sn | Pb | Al |
| content, wt.-% | 13.0 | 1.0 | 1.0 | 1.5 | 0.005 | 0.4 | 0.05 | 0.05 | 0.05 | 0.05 | 0.05 | 0.05 | bal. |
| max. content | 14.0 | 1.15 | 1.15 | 1.7 | 0.01 | 0.5 | 0.10 | 0.10 | 0.10 | 0.10 | 0.10 | 0.10 | - |
| min. content | 12.0 | 0.85 | 0.85 | 1.3 | 0.002 | 0.3 | 0.03 | 0.03 | 0.03 | 0.03 | 0.03 | 0.03 | - |

| Beispiel 4 | | | | | | | | | | | | |
|---|---|---|---|---|---|---|---|---|---|---|---|---|
| Element | Si | Cu | Ni | Mg | P | Fe | Mn | Zn | Ti | Cr | Sn | P | Al |
| content, wt.-% | 17.0 | 4.5 | 0.1 | 0.6 | 0.005 | 0.5 | 0.05 | 0.05 | 0.05 | 0.05 | 0.05 | 0.05 | bal. |
| max. content | 18.5 | 5.0 | 0.15 | 0.7 | 0.01 | 0.6 | 0.10 | 0.10 | 0.10 | 0.10 | 0.10 | 0.10 | - |
| min. content | 15.5 | 4.0 | 0.05 | 0.5 | 0.002 | 0.4 | 0.03 | 0.03 | 0.03 | 0.03 | 0.03 | 0.03 | - |

| Element | Beispiel 5 | | | Beispiel 6 | | |
|---|---|---|---|---|---|---|
| | content, wt.-% | max. | min. | content, wt.-% | max. | min. |
| Si | 15.0 | 16.5 | 13.5 | 1.00 | 1.15 | 0.85 |
| Fe | 2.00 | 2.20 | 1.80 | 0.80 | 1.00 | 0.60 |
| Cu | 4.00 | 4.40 | 3.60 | 0..50 | 0.60 | 0.40 |
| Mn | – | – | – | 0.50 | 0.60 | 0.40 |
| Mg | 0.20 | 0.25 | 0.15 | 5.00 | 5.50 | 4.50 |
| Cr | – | – | – | 0.20 | 0.25 | 0.15 |
| Zn | 0.30 | 0.35 | 0.25 | 4.00 | 4.50 | 3.50 |
| Ti | – | – | – | 0.20 | 0.25 | 0.15 |
| B | – | – | – | 0.01 | 0.05 | – |
| Be | – | – | – | 0.005 | 0.05 | – |
| Ca | 0.005 | 0.010 | – | – | – | – |
| Na | 0.005 | 0.01 | 0.002 | – | – | – |
| Li | – | – | – | 0.005 | 0.01 | 0.002 |
| Ni | 3.00 | 3.30 | 2.70 | 0.50 | 0.60 | 0.40 |
| Pb | 0.30 | 0.35 | 0.25 | 0.05 | 0.10 | 0.03 |
| Sn | 0.10 | 0.15 | 0.05 | – | – | – |
| Zr | – | – | – | 0.10 | 0.15 | 0.05 |
| Bi | 0.05 | 0.10 | 0.03 | 0.20 | 0.25 | 0.15 |
| P | 0.005 | 0.01 | 0.002 | – | – | – |
| Sr | 0.05 | 0.10 | 0.03 | – | – | – |
| Cd | – | – | – | 0.05 | 0.10 | 0.03 |
| Sb | 0.15 | 0.20 | 0.10 | 0.05 | 0.10 | 0.03 |
| Co | – | – | – | 0.20 | 0.25 | 0.15 |
| V | – | – | – | 0.05 | 0.10 | 0.03 |
| Ag | – | – | – | 0.10 | 0.15 | 0.05 |
| In | – | – | – | 0.01 | 0.05 | – |
| Al | bal. | - | - | bal. | - | - |

Aus den Beispielen wird deutlich, daß aufgrund der homogenen Verteilung der Inhaltsstoffe Kalibrierproben hergestellt werden können, die eine Vielzahl von Legierungselementen in nahezu beliebiger Konzentration aufweisen können. Auch bei einer lediglich punktförmigen Erhitzung zur Anregung einer Strahlenemission ist sichergestellt, daß alle Inhaltsstoffe gleichmäßig erfaßt werden, wodurch ein repräsentatives Spektrum ermittelt werden kann.

**Patentansprüche**

1. Kalibrierprobe, insbesondere für die Emissionsspektroskopie, die als Inhaltsstoffe einen Grundwerkstoff und wenigstens ein Legierungselement aufweist, dadurch **gekennzeichnet**, daß die Inhaltsstoffe in feiner, gleichmäßiger Verteilung und mit einer maximalen Korngröße von 100 μm vorliegen, wobei der Werkstoff für die Kalibrierprobe durch Verfestigen der feindispers zerstäubten Schmelze der Inhaltsstoffe hergestellt ist.

2. Kalibrierprobe nach Anspruch 1, dadurch gekennzeichnet, daß der Wasserstoffgehalt kleiner als 1 ppm ist.

3. Kalibrierprobe nach Anspruch 1 oder 2, dadurch gekennzeichnet, daß der Sauerstoffgehalt kleiner als 300 ppm ist.

4. Kalibrierprobe nach einem der Ansprüche 1 bis 3, dadurch gekennzeichnet, daß der Grundwerkstoff Aluminium (Al) ist.

5. Verfahren zum Herstellen einer Kalibrierprobe, insbesondere für die Emissionsspektroskopie, aus einem Grundwerkstoff und wenigstens einem Legierungselement, dadurch gekennzeichnet, daß eine Schmelze des Grundwerkstoffs und des Legierungselementes hergestellt wird, daß die Schmelze mittels einer Zerstäubervorrichtung unter Zufuhr eines Inertgases in feindisperse Teilchen zerstäubt wird, die auf einer sich relativ zur Zerstäubervorrichtung bewegenden Auffangvorrichtung zu einem Vorformling verfestigt werden, und daß aus dem Vorformling die Kalibrierprobe gefertigt wird.

6. Verfahren nach Anspruch 5, dadurch gekennzeichnet, daß die Auffangvorrichtung rotiert.

7. Verfahren nach Anspruch 5 oder 6, dadurch gekennzeichnet, daß die Zerstäubervorrichtung hin- und herbewegt wird.

8. Verfahren nach einem der Ansprüche 5 bis 7, dadurch gekennzeichnet, daß der Abstand zwischen der Zerstäubervorrichtung und der jeweils der Zerstäubervorrichtung zugekehrten Oberfläche der Auffangvorrichtung bzw. des Vorformlings im wesentlichen konstant gehalten wird, indem in Abhängigkeit von der Dicke des Vorformlings die Auffangvorrichtung relativ zur Zerstäubervorrichtung von dieser abgezogen wird.

9. Verfahren nach einem der Ansprüche 5 bis 8, dadurch gekennzeichnet, daß wenigstens ein Legierungselement durch wenigstens einen zusätzlichen Sprühstrahl in den Sprühstrahl der Schmelze und/oder auf die dem Sprühstrahl zugewandte Oberfläche des Sprühgutes in den Werkstoff eingebracht wird.

10. Verfahren nach einem der Ansprüche 5 bis 9, dadurch gekennzeichnet, daß der Vorformling warm und/oder kalt umgeformt wird.

11. Verfahren nach einem der Ansprüche 5 bis 10, dadurch gekennzeichnet, daß als Grundwerkstoff Aluminium verwendet wird.

12. Verfahren nach einem der Ansprüche 5 bis 11, dadurch gekennzeichnet, daß als Inertgas Stickstoff ($N_2$) verwendet wird.

13. Verfahren nach einem der Ansprüche 5 bis 12, dadurch gekennzeichnet, daß als Inertgas Argon (Ar) verwendet wird.

7